# EUROPEAN PATENT SPECIFICATION

(11) **EP 3 013 102 B1**
(45) Date of publication and mention of the grant of the patent: **04.07.2018**
(21) Application number: 15175760.6
(22) Date of filing: 07.07.2015
(51) Int. Cl.: H04W 48/20, H04W 48/02, H04W 48/12

(54) **METHOD OF HANDLING SERVING CELL BECOMING BARRED STATUS, BASE STATION USING THE SAME, AND USER EQUIPMENT USING THE SAME**
VERFAHREN ZUR HANDHABUNG EINER VERSORGENDEN ZELLE, DIE IN EINEN GESPERRTEN STATUS GELANGT, BASISSTATION UNTER VERWENDUNG DAVON UND BENUTZERGERÄT DAMIT
PROCÉDÉ DE MANIPULATION DE CELLULE DE DESSERTE OBTENANT LE STATUT INTERDIT, STATION DE BASE UTILISANT CELUI-CI ET ÉQUIPEMENT UTILISATEUR UTILISANT CELUI-CI

(30) Priority: 24.10.2014 US 201462067999 P; 06.01.2015 TW 104100256
(43) Date of publication of application: 27.04.2016
(73) Proprietor: Acer Incorporated, New Taipei City 221 (TW)
(72) Inventor: CHEN, Pei-Jung, Taiwan, ROC New Taipei City 221, (TW)
(74) Representative: Chamberlain, Alan James

(56) References cited:
- EP-A1- 1 626 605
- US-A1- 2013 242 955
- "3rd Generation Partnership Project; Technical Specification Group Radio Access Network; Radio Resource Control (RRC); Protocol specification (Release 12)", 3GPP STANDARD; 3GPP TS 25.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V12.3.0, 22 September 2014 (2014-09-22), pages 1-2204, XP050925628, [retrieved on 2014-09-22]
- "3rd Generation Partnership Project; Technical Specification Group Radio Access Network; Evolved Universal Terrestrial Radio Access (E-UTRA); User Equipment (UE) procedures in idle mode (Release 12)", 3GPP STANDARD; 3GPP TS 36.304, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V12.2.0, 16 September 2014 (2014-09-16), pages 1-37, XP050925613, [retrieved on 2014-09-16]

## Description

### TECHNICAL FIELD

The invention relates to a mobile communication technique, and particularly relates to a method for handling serving cells becoming barred status, a base station using the same, and a user equipment using the same.

### BACKGROUND

Due to quick development of mobile communication technique, people can use user equipments (UEs) such as mobile phones, tablet personal computers (PCs), etc. to make phone calls, send messages or access the Internet at anytime anywhere, or can even access video and audio streaming services (for example, to listen to music or watch movies, etc) requiring a high transmission bandwidth or high transmission speed,. One of the advantages of the mobile communication technique is to provide higher mobility. For example, based on a long term evolution (LTE) technique, a UE can still access a network service under a moving speed of 500 km/hr. However, since a service coverage area of one base station is limited, the UE is required to keep performing power measurement, so as to select the base station with a better receiving power to maintain the connection. When the UE measures that the receiving power of the current base station is lower than that of the other base station, the UE activates a cell re-selection mechanism.

Moreover, due to factors such as maintenance setting of a telecom operator or base station failure, etc., the base station probably switches a cell status to a barred status, and the UE is not allowed to camp on this base station. At this moment, the UE within the service coverage area of the base station would activate the cell re-selection mechanism to camp on another cell. In the third generation partnership project (3GPP) specification TS 36.304, two cell selection procedures are provided to the UE. The first is an initial cell selection procedure, by which the UE rescans all of radio frequency (RF) channels in the evolved universal terrestrial radio access (E-UTRA) bands based on its capabilities thereof, so as to select a suitable cell for connection. The second is a stored information cell selection procedure, by which a suitable cell is selected according to cell parameters related information stored through previous detection of the cells to set up the connection.

However, the aforementioned initial cell selection procedure is required to scan all of the RF channels supported by the UE, which takes too much time. Moreover, in the aforementioned stored information cell selection procedure, if the stored information is outdated, the performance of the cell selection procedure is decreased. In the worst case, the UE may not be able to find a suitable cell according to the stored information, and finally still re-performs the initial cell selection procedure. Therefore, it is necessary to provide a method to resolve the aforementioned problems of the conventional cell selection procedure encountered after the base station is barred.

US 2013/242955 A1 describes a method and apparatus for determining information about access barring. Additional background information can be found in the 3GPP standard "3rd Generation Partnership Project; Technical Specification Group Radio Access Network; Radio Resource Control (RRC); Protocol specification (Release 12)", 3GPP TS 25.331, V12.3.0, 22 September 2014.

### BRIEF SUMMARY

The invention is directed to a method for handling serving cells becoming barred status, a base station using the same, and a user equipment using the same, by which when the base station is switched to the barred status, by providing cell re-selection related information, the user equipment is capable of updating cell information, so as to improve efficiency of a cell selection procedure. The invention relates to a method operated in a base station according to claim 1, to a corresponding base station apparatus according to claim 4, to a method operated in a user equipment according to claim 7 and to a corresponding user equipment apparatus according to claim 11. Further embodiments are defined in the dependent claims.

### BRIEF DESCRIPTION OF THE SEVERAL VIEWS OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic diagram of a communication system according to an embodiment of the invention.
FIG. 2 is a block diagram of a base station according to an embodiment of the invention.
FIG. 3 is a block diagram of a user equipment (UE) according to an embodiment of the invention.
FIG. 4 is a flowchart illustrating a method for handling serving cells becoming barred status according to an embodiment of the invention.
FIG. 5 is a flowchart illustrating an execution method of a base station according to an embodiment of the invention.
FIG. 6 is a flowchart illustrating an execution method of UE according to an embodiment of the invention.

### DETAILED DESCRIPTION

The embodiments and/or examples of the following description which are not covered by the appended claims are considered as not being part of the present invention.

In order to improve efficiency of a cell selection procedure, in the embodiment of the invention, after a base station determines to switch to a barred status, the base station provides system information blocks (SIBs) (for example, SIB4, SIB5 and/or SIB6) message comprising carrier frequencies or neighboring cells related information to a user equipment (UE), and the UE analyzes the SIBs to update the neighboring cells related information. In this way, the UE can execute the cell selection procedure according to the updated neighboring cells related information, so as to improve a performance of the conventional cell selection procedure. A plurality of embodiments are provided below, these embodiments are not limited to the following disclosure, and those skilled in the art can suitably adjust the embodiments according to an actual requirement.

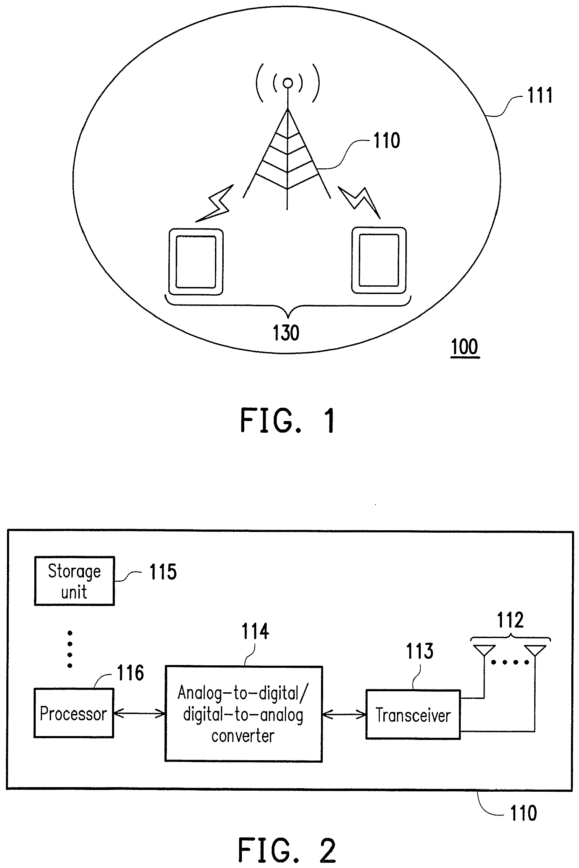

FIG. 1 is a schematic diagram of a communication system according to an embodiment of the invention. Referring to FIG. 1, the communication system 100 includes a base station 110 and UEs 130. In the present embodiment, the base station 110 serves as a serving cell for providing communication and network services to the UEs 130 (in FIG. 1, two UEs 130 are illustrated, though the invention is not limited thereto) within its service coverage area 111.

The base station 110 may have various implementations, which includes (but is not limited to) a home evolved node B (HeNB), an eNB, an advanced base station (ABS), a base transceiver system (BTS), an access point, a home base station, a relay, a scatter, a repeater, an intermediate node, an intermediary and/or satellite-based communication base stations.

FIG. 2 is a block diagram of the base station 110 according to an embodiment of the invention. The base station 110 can be composed of functional devices shown in FIG. 2. The base station 110 may at least include (but is not limited to) a transceiver 113, an analog-to-digital (AD) /digital-to-analog (D/C) converter 114, a processor 116, a storage unit 115 selectively configured according to an actual situation and one or a plurality of antenna units 112. The transceiver 113 transmits a downlink signal and receives an uplink signal in a wireless manner. The transceiver 113 can also execute operations such as low noise amplification, impedance matching, frequency mixing, frequency up-conversion or frequency down-conversion, filtering, amplifying, or the like. The analog-to-digital (AD) /digital-to-analog (D/C) converter 104 is configured to convert a signal from an analog signal format to a digital signal format during an uplink signal processing period, and convert a signal from the digital signal format to the analog signal format during a downlink signal processing period.

The processor 116 is configured to process digital signal and to execute a procedure of the exemplary embodiment of the invention. Moreover, the processor 116 can be coupled to the storage unit 115 to store program codes, a device configuration, a codebook, buffer or permanent data, or record a plurality of modules executed by the processor 116. The functions of the processor 116 can be implemented by using programmable units such as a microprocessor, a micro controller, a digital signal processing (DSP) chip, a field programmable gate array (FPGA), etc. The functions of the processor 116 can also be implemented by an independent electronic device or an integrated circuit (IC), and the processor 116 can also be implemented by hardware or software.

The UE 130 may have various implementations, which includes (but is not limited to) a mobile station, an advanced mobile station (AMS), a server, a client, a desktop computer, a notebook computer, a network computer, a working station, a personal digital assistant (PDA), a personal computer (PC), a scanner, a telephone device, a pager, a camera, a television, a handheld video game device, a music device, a wireless sensor, etc.

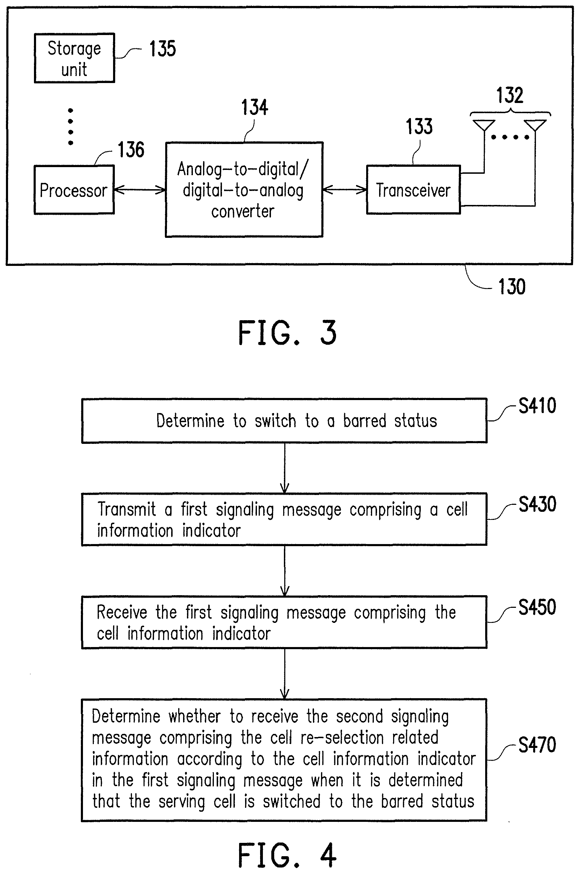

FIG. 3 is a block diagram of the UE 130 according to an embodiment of the invention. The UE 130 can be composed of functional devices shown in FIG. 3. The UE 130 may at least include (but is not limited to) a transceiver 133, an analog-to-digital (AD) /digital-to-analog (D/C) 134, a processor 136, a storage unit 135 selectively configured according to an actual situation and one or a plurality of antenna units 132. The processor 136 can be implemented by hardware or software. Description of the functions of various components of the UE 130 is similar to the description of the base station 110, and therefore details thereof are not repeated.

FIG. 4 is a flowchart illustrating a method for handling serving cells becoming barred status according to an embodiment of the invention. Referring to FIG. 4, the method of the present embodiment is adapted to the communication system 100 of FIG. 1, the base station 110 of FIG. 2 and the UE 130 of FIG. 3. In the following, the method of the present embodiment of the invention is described below with reference of various devices and elements in the communication system 100, the base station 110 and the UE 130. The flow of the method can be adjusted according to an actual requirement, and is not limited to the following description.

In step S410, the base station 110 determines to switch to a barred status. In order to meet operation and maintenance requirements of a telecom operator or other network problems, the telecom operator can set a cell status of the base station 110 to the barred status, so as to refuse the UE 130 to camp on the base station 110 serving as the serving cell of the UE 130.

Then, in step S430, the base station transmits a first signaling message comprising a cell information indicator, where the cell information indicator in the first signaling message is used for indicating whether to transmit a second signaling message comprising cell re-selection related information.

In detail, in a general case, when the base station 110 determines to switch to the barred status, the base station 110 notifies the UE 130 that system information is changed by transmitting a paging message comprising system information modification of "true". Moreover, the base station 110 broadcasts an SIB1 message to the UEs 130 within the service coverage area 111 thereof, where a "cell barred" field (Information Element, IE) in the SIB1 message is modified to "barred". The UE 130 receives the SIB1 message with the "cell barred" field modified to "barred" within 80 ms, and starts a cell selection procedure, and no longer monitors the message transmitted from the base station 110. However, the cell re-selection related information of the UE 130 may be outdated, so that the efficiency of the cell selection procedure may be decreased.

Therefore, the base station 110 of the present embodiment provides the cell re-selection related information to the UE 130 to update the outdated information of the UE 130. In the present embodiment, the base station 110 first determines whether to provide the cell re-selection related information to the UE 130, and provides the cell information indicator (for example, cell_barred_help_indicator) in the first signaling message (for example, the paging message, the SIB1 message, etc.). The cell information indicator can be an indicator of one bit, which is used for indicating whether the base station 110 provides the cell re-selection related information. For example, when the base station 110 determines to provide the cell re-selection related information to the UE 130, the base station 110 sets the cell information indicator in the first signaling message as "true" (for example, the indicator of one bit is set to "1"). Then, the base station 110 provides the cell re-selection related information in the second signaling message, which is described later. Conversely, when the base station 110 determines not to provide the cell re-selection related information to the UE 130, the base station 110 sets the cell information indicator in the first signaling message as "false" (for example, the indicator of one bit is set to "0"), and the base station 110 does not provides the cell re-selection related information.

Then, in step S450, the UE 130 receives the first signaling message comprising the cell information indicator. In an embodiment, the first signaling message is the paging message, and the UE 130 first stores the cell information indicator in the storage unit 135. In another embodiment, the first signaling message is the SIB1 message.

Then, in step S470, when the UE 130 determines that the base station 110 is switched to the barred status, the UE 130 determines whether to receive the second signaling message comprising the cell re-selection related information according to the cell information indicator in the first signaling message. In an embodiment, if the first signaling message is the paging message, after the UE 130 receives a third signaling message indicating that the current serving cell is switched to the barred status, the UE 130 determines the stored cell information indicator. The third signaling message is, for example, the SIB1 message, and the UE 130 can learn that the base station 110 is switched to the barred status from the "cell barred" field indicating "barred" in the third signaling message. The UE 130 reads the cell information indicator stored in the storage unit 135 and determines whether the cell information indicator is "true" or "false". Namely, in the present embodiment, after the UE 130 receives the paging message comprising the cell information indicator, the UE 130 would not confirm whether the cell status of the base station 110 is the barred status until receiving the third signaling message comprising the "cell barred" field indicating "barred" from the base station 110.

In another embodiment, if the first signaling message is the SIB1 message, since the first signaling message comprising both the "cell barred" field indicating "barred" and the cell information indicator, the UE 130 directly determines that the current serving cell is switched to the barred status according to the first signaling message, and starts to determine whether the cell information indicator in the SIB1 message is "true" or "false".

For example, if the cell information indicator is "true", the UE 130 continually monitors the second signaling message transmitted by the base station 110. Conversely, if the cell information indicator is "false", the UE 130 immediately performs the cell selection procedure.

In the present embodiment, the second signaling message includes an SIB (for example, SIB4, SIB5 and/or SIB6) message, and the cell re-selection related information of the SIB at least includes a carrier frequency or neighboring cells related information For example, the SIB4 message includes neighboring cells related information (for example, intraFreqBlackCellList or intraFreqNeighbCellList, etc.) for an intra-frequency, the SIB5 message includes neighboring cells related information (for example, interFreqBlackCellList or interFreqCarrierFreqList, etc.) for an inter-frequency, and the SIB6 message includes neighboring cells related information (for example, carrierFreqListUTRA-FDD or carrierFreqListUTRA-TDD, etc.) for an inter-radio access technology (inter-RAT).

If the cell information indicator indicates that the base station 110 transmits or the UE 130 receives the second signaling message comprising the cell re-selection related information (for example, the cell information indicator is "true"), the base station 110 transmits the second signaling message comprising the SIB in a next modification period (for example, a broadcast control channel (BCCH) modification period), and the UE 130 receives the second signaling message in the next modification period.

In some embodiments, the base station 110 can further increase a repetition rate for transmitting the SIB. For example, the base station 110 may decrease a value in a system information periodicity field of the SIB1 message serving as the first signaling message or the third signaling message (for example, to modify "rf16" that represents 16 radio frames to "rf8" representing 8 radio frames), so as to increase the repetition rate for transmitting the SIB. In this way, the UE 130 can quickly obtain the second signaling message comprising the cell re-selection related information.

It should be noticed that before the base station 110 transmits the second signaling message comprising the neighboring cells related information, the base station 110 may, for example, receive the neighboring cells related information through a transmission interface (for example, an X2 interface) connected to the neighboring base station, or receive the neighboring cells related information from a core network (for example, through an S1 interface).

In order to make the embodiment of the invention to be more easy to understand, examples of operation procedures based on the base station 110 and the UE 130 of the embodiment of the invention are provided below.

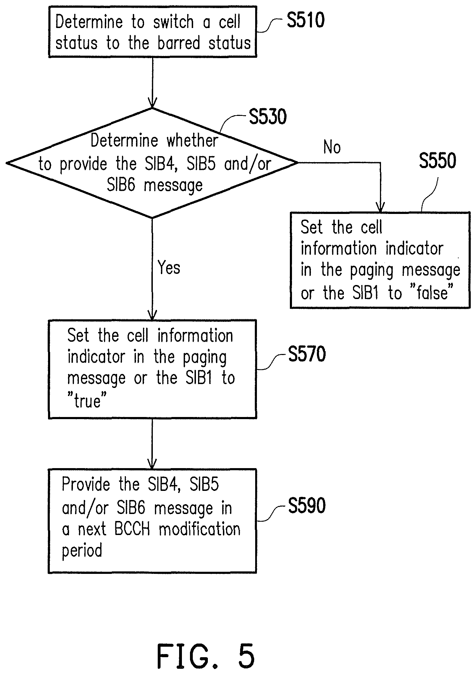

FIG. 5 is a flowchart illustrating an execution method of the base station 110 according to an embodiment of the invention. Referring to FIG. 5, the base station 110 determines to switch the cell status to the barred status (step S510), and determines whether to provide the SIB4, SIB5 and/or SIB6 message (step S530). If not, the base station 110 sets the cell information indicator (for example, cell_barred_help_indicator) in the paging message or the SIB1 to "false" (step S550), and transmits the message to the UE 130. Conversely, the base station 110 sets the cell_barred_help_indicator in the paging message or the SIB1 to "true" (step S570), and transmits the message to the UE 130, and provides the SIB4, SIB5 and/or SIB6 message to the UE 130 in a next BCCH modification period (step S590).

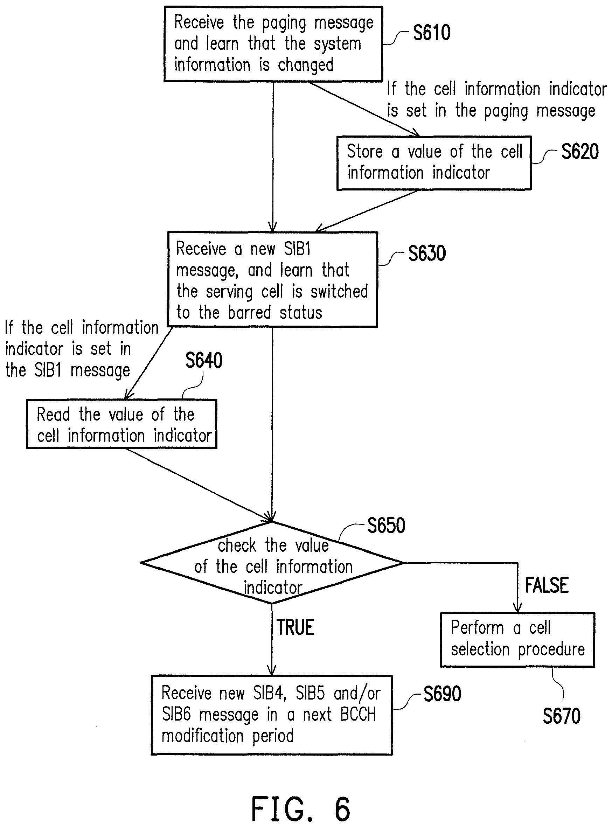

FIG. 6 is a flowchart illustrating an execution method of the UE 130 according to an embodiment of the invention. Referring to FIG. 6, the UE 130 receives the paging message and learns that the system information is changed (step S610). If the cell information indicator (for example, cell_barred_help_indicator) is set in the paging message, the UE 130 stores a value of the cell_barred_help_indicator (step S620). In step S630, the UE 130 receives a new SIB1 message within 80 ms, and learns that the serving cell is switched to the barred status (step S630). If the cell_barred_help_indicator is set in the SIB1 message, the UE 130 reads the value of the cell_barred_help_indicator (step S640). Then, the UE 130 checks the value of the cell_barred_help_indicator (step S650). If the value of the cell_barred_help_indicator is "true", the UE 130 can receive new SIB4, SIB5 and/or SIB6 message in a next BCCH modification period (step S690). If the value of the cell_barred_help_indicator is "false", the UE 130 immediately performs the cell selection procedure (step S670).

In the present embodiment, keywords or terms related to 3GPP are only used for presenting the concept of the invention. However, the same concept presented in the invention can be applied to any other system by those skilled in the art, for example, IEEE 802.11, IEEE 802.16, WiMAX or the like.

In summary, the base station of the embodiment of the invention can notify the UE whether to provide the cell re-selection related information by adding the cell information indicator in the paging message or the SIB1 message. Moreover, the base station can provide the SIB4, SIB5 and/or SIB6 message comprising the neighboring cells related information or the carrier frequencies, and the UE receives the same to update the outdated information. In this way, the UE can perform the cell selection procedure according to the updated information, so as to improve the efficiency of the cell selection procedure.

## Claims

1. A method for handling serving cells becoming barred status, performed by a base station (110), the method comprising:
determining whether to provide updated cell re-selection related information when the base station (110) determines to switch to the barred status (S410); and, if so,
transmitting a first signaling message comprising a cell information indicator, wherein the cell information indicator is used for indicating whether the base station (110) will transmit a second signaling message comprising at least one system information block and the updated cell re-selection related information (S430),
wherein either the first signaling message further indicates that the serving cell is switched to the barred status, or the base station (110) transmits a third signaling message indicating that the serving cell is switched to the barred status after transmitting the first signaling message;
wherein the second signaling message is transmitted in a next broadcast control channel, BCCH, modification period;
wherein the cell re-selection related information of the at least one system information block at least comprises a carrier frequency or neighboring cells related information.

2. The method as claimed in claim 1, wherein after the step of transmitting the first signaling message comprising the cell information indicator, the method further comprises:
transmitting the at least one system information block in a next BCCH modification period if the cell information indicator indicates the base station (110) will transmit the second signaling message comprising the cell re-selection related information.

3. The method as claimed in claim 2, wherein before the step of transmitting the at least one system information block in the next BCCH modification period, the method further comprises:
increasing a repetition rate for transmitting the at least one system information block.

4. A base station (110), comprising:
a transceiver (113), transmitting and receiving a wireless signal;
a processor (116), coupled to the transceiver (113), and configured to execute the following steps:
determining to switch to a barred status;
determining whether to provide updated cell re-selection related information; and
if updated cell re-selection related information is to be provided, transmitting the first signaling message comprising a cell information indicator though the transceiver (113), wherein the cell information indicator in the first signaling message is used for indicating whether the base station (110) will transmit a second signaling message comprising at least one system information block and the updated cell re-selection related information through the transceiver (113),
wherein either the first signaling message further indicates that a serving cell of the base station is switched to the barred status, or the base station (110) transmits a third signaling message indicating that the serving cell is switched to the barred status through the transceiver (133) after transmitting the first signaling message,
wherein the second signaling message is transmitted in a next broadcast control channel, BCCH, modification period;
wherein the cell re-selection related information of the at least one system information block at least comprises a carrier frequency or neighboring cells related information.

5. The base station (110) as claimed in claim 4, wherein the processor is further configured to execute a following step:
transmitting the at least one system information block through the transceiver (113) in a next BCCH modification period if the cell information indicator indicates the base station (110) will transmit the second signaling message comprising the cell re-selection related information.

6. The base station (110) as claimed in claim 5, wherein the processor is further configured to execute a following step:
increasing a repetition rate for transmitting the at least one system information block.

7. A method for handling serving cells becoming barred status, performed by a user equipment (130), the method comprising:
receiving a first signaling message comprising a cell information indicator from the serving cell (S610),
wherein either the first signaling message further indicates that the serving cell is switched to the barred status, or the user equipment (130) receives a third signaling message indicating that the serving cell is switched to the barred status after receiving the first signaling message; and
determining whether to receive a second signaling message comprising at least one system information block and cell re-selection related information according to the cell information indicator when it is determined that the serving cell is switched to the barred status (S630); and
if it is determined that the serving cell is barred and that the cell information indicator is set to a certain value, receiving the second signaling message in a next broadcast control channel, BCCH, modification period, before performing cell re-selection,
wherein the user equipment (130) updates an outdated cell information according to the cell re-selection related information,
wherein the cell re-selection related information of the at least one system information block at least comprises a carrier frequency or neighboring cells related information.

8. The method as claimed in claim 7, wherein after the step of determining whether to receive the second signaling message comprising the cell re-selection related information according to the cell information indicator in the first signaling message, the method further comprises:
receiving the at least one system information block in a next BCCH modification period if the cell information indicator indicates to receive the second signaling message comprising the cell re-selection related information.

9. The method as claimed in claim 7, wherein the first signaling message comprises a paging message, and after the step of receiving the first signaling message comprising the cell information indicator, the method further comprises:
storing the cell information indicator; and
determining the stored cell information indicator after receiving the third signaling message indicating that the current serving cell is switched to the barred status.

10. The method as claimed in claim 7, wherein first signaling message comprises a system information block type 1 message, and after the step of receiving the first signaling message comprising the cell information indicator, the method further comprises:
determining that the serving cell is switched to the barred status, and determining the cell information indicator in the system information block type 1 message.

11. A user equipment (130), comprising:
a transceiver (133), transmitting and receiving a wireless signal;
a processor (136), coupled to the transceiver (133), and configured to execute the following steps:
receiving a first signaling message comprising a cell information indicator though the transceiver (133) from the serving cell, wherein either the first signaling message further indicates that the serving cell is switched to the barred status, or the user equipment (130) receives a third signaling message indicating that the serving cell is switched to the barred status through the transceiver (133) after receiving the first signaling message; and
determining whether to receive a second signaling message comprising at least one system information block and cell re-selection related information through the transceiver (133) according to the cell information indicator when it is determined that the serving cell is switched to the barred status; and
if it is determined that the serving cell is barred and that the cell information indicator is set to a certain value, receiving the second signaling message in a next broadcast control channel, BCCH, modification period, before performing cell re-selection,
wherein the user equipment (130) is configured with means adapted to update an outdated cell information according to the cell re-selection related information,
wherein the cell re-selection related information of the at least one system information block at least comprises a carrier frequency or neighboring cells related information.

12. The user equipment (130) as claimed in claim 11, wherein the processor (136) is further configured to execute the following step:
receiving the at least one system information block in a next BCCH modification period if the cell information indicator indicates to receive the second signaling message comprising the cell re-selection related information.

13. The user equipment (130) as claimed in claim 11, wherein the first signaling message comprises a paging message, and the processor (136) is further configured to execute the following steps:
storing the cell information indicator; and
determining the stored cell information indicator after receiving the third signaling message indicating that the current serving cell is switched to the barred status.

14. The user equipment (130) as claimed in claim 11, wherein the first signaling message comprises a system information block type 1 message, and the processor (136) is further configured to execute a following step:
determining that the serving cell is switched to the barred status, and determining the cell information indicator in the system information block type 1 message.

## Patentansprüche

1. Verfahren zur Handhabung von aktiven Funkzellen, denen von einer Basisstation (110) ein Sperrzustand zugewiesen wird, wobei das Verfahren umfasst:
bestimmen, ob aktualisierte auf die erneute Auswahl bezogene Zelleninformationen bereitgestellt werden sollen, wenn die Basisstation (110) bestimmt, in den Sperrstatus zu wechseln (S410); und wenn dem so ist,
eine erste Kennzeichennachricht mit einem Zelleninformationsindikator übertragen, wobei der Zelleninformationsindikator der Anzeige dient, ob die Basisstation (110) eine zweite Kennzeichennachricht mit mindestens einem Systeminformationsblock und aktualisierten auf die erneute Auswahl bezogene Zelleninformationen übertragen wird (S430);
wobei die erste Kennzeichennachricht ferner anzeigt, dass die aktive Funkzelle in den Sperrzustand geschaltet wird oder die Basisstation (110) eine dritte Kennzeichennachricht überträgt, die anzeigt, dass die aktive Funkzelle nach dem Übertragen der ersten Kennzeichennachricht in den Sperrzustand geschaltet wird;
wobei die zweite Kennzeichennachricht im Modifikationszeitraum des nächsten Zellsysteminformationskanals (Broadcast Control Channel, BCCH) gesendet wird;
wobei die auf die erneute Auswahl bezogenen Zelleninformationen mindestens einen Systeminformationsblock von mindestens einer Trägerfrequenz oder auf die Nachbarzellen bezogene Informationen umfasst.

2. Verfahren gemäß Anspruch 1, wobei das Verfahren nach der Übertragung der ersten Kennzeichennachricht mit dem Zelleninformationsindikator weiterhin umfasst:
im nächsten BCCH-Modifikationszeitraum mindestens einen Systeminformationsblock übertragen, wenn der Zelleninformationsindikator anzeigt, dass die Basisstation (110) die zweite Kennzeichennachricht mit auf die erneute Auswahl bezogene Zelleninformationen übertragen wird.

3. Verfahren gemäß Anspruch 2, wobei das Verfahren ferner umfasst, bevor im nächsten BCCH-Modifikationszeitraum mindestens ein Systeminformationsblock übertragen wird:
die Wiederholungsfrequenz für die Übertragung von mindestens einem Systeminformationsblock erhöhen.

4. Basisstation (110) umfassend:
eine Sende-Empfangseinrichtung (113), die ein drahtloses Signal sendet und empfängt;
einen Prozessor (116), der mit der Sende-Empfangseinrichtung (113) gekoppelt und dafür ausgelegt ist, die folgenden Schritte auszuführen:
bestimmen, in den Sperrzustand zu wechseln;
bestimmen, ob aktualisierte auf die erneute Auswahl bezogene Zelleninformationen bereitgestellt werden sollen; und
eine erste Kennzeichennachricht mit einem Zelleninformationsindikator mittels einer Sende-Empfangseinrichtung (113) übertragen, wenn aktualisierte auf die erneute Auswahl bezogene Zelleninformationen zur Verfügung gestellt werden müssen, wobei der Zelleninformationsindikator in der ersten Kennzeichennachricht der Anzeige dient, ob die Basisstation (110) eine zweite Kennzeichennachricht mit mindestens einem Systeminformationsblock und aktualisierten auf die erneute Auswahl bezogene Zelleninformationen mittels einer Sende-Empfangseinrichtung (113) übertragen wird;
wobei die erste Kennzeichennachricht ferner anzeigt, dass eine aktive Funkzelle der Basisstation in den Sperrzustand geschaltet wird oder die Basisstation (110) eine dritte Kennzeichennachricht überträgt, die anzeigt, dass die aktive Funkzelle nach dem Übertragen der ersten Kennzeichennachricht über die Sende-Empfangseinrichtung (133) in den Sperrzustand geschaltet wird;
wobei die zweite Kennzeichennachricht im Modifikationszeitraum des nächsten Zellsysteminformationskanals (Broadcast Control Channel, BCCH) gesendet wird;
wobei die auf die erneute Auswahl bezogenen Zelleninformationen mindestens einen Systeminformationsblock von mindestens einer Trägerfrequenz oder auf die Nachbarzellen bezogene Informationen umfasst.

5. Basisstation (110) gemäß Anspruch 4, wobei der Prozessor ferner dafür ausgelegt ist, den folgenden Schritt auszuführen:
im nächsten BCCH-Modifikationszeitraum mindestens einen Systeminformationsblock mittels der Sende-Empfangseinrichtung (113) übertragen, wenn der Zelleninformationsindikator anzeigt, dass die Basisstation (110) die zweite Kennzeichennachricht mit auf die erneute Auswahl bezogene Zelleninformationen übertragen wird.

6. Basisstation (110) gemäß Anspruch 5, wobei der Prozessor ferner dafür ausgelegt ist, den folgenden Schritt auszuführen:
die Wiederholungsfrequenz für die Übertragung von mindestens einem Systeminformationsblock erhöhen.

7. Verfahren zur Handhabung von aktiven Funkzellen, denen von einem UMTS-Endgerät (130) ein Sperrzustand zugewiesen wird, wobei das Verfahren umfasst:
von der aktiven Funkzelle (S610) eine erste Kennzeichennachricht mit einen Zellinformationsindikator empfangen;
wobei die erste Kennzeichennachricht ferner anzeigt, dass die aktive Funkzelle in den Sperrzustand geschaltet wird oder das UMTS-Endgerät (130) eine dritte Kennzeichennachricht empfängt, die anzeigt, dass die aktive Funkzelle nach dem Empfang der ersten Kennzeichennachricht in den Sperrzustand geschaltet wird;
bestimmen, ob eine gemäß dem Zellinformationsindikator zweite Kennzeichennachricht mit mindestens einem Systeminformationsblock und auf die erneute Auswahl bezogene Zelleninformationen empfangen werden soll, wenn festgestellt wird, dass die aktive Funkzelle in den Sperrzustand geschaltet ist (S630); und
eine zweite Kennzeichennachricht im nächsten Modifikationszeitraum des Zellsysteminformationskanals (BCCH) empfangen, bevor die Zelle erneut ausgewählt wird, wenn festgestellt wird, dass die aktive Funkzelle gesperrt und der Zelleninformationsindikator auf einen bestimmten Wert gesetzt ist;
wobei das UMTS-Endgerät (130) veraltete Zelleninformation gemäß den auf die erneute Auswahl bezogenen Zelleninformationen aktualisiert;
wobei die auf die erneute Auswahl bezogenen Zelleninformationen mindestens einen Systeminformationsblock von mindestens einer Trägerfrequenz oder auf die Nachbarzellen bezogene Informationen umfasst.

8. Verfahren gemäß Anspruch 7, wobei das Verfahren nach der Feststellung, ob die zweite Kennzeichennachricht gemäß dem Zelleninformationsindikator in der ersten Kennzeichennachricht mit den auf die erneute Auswahl bezogenen Zelleninformationen empfangen werden soll, ferner umfasst:
im nächsten BCCH-Modifikationszeitraum mindestens einen Systeminformationsblock empfangen, wenn der Zelleninformationsindikator anzeigt, dass die zweite Kennzeichennachricht mit den auf die erneute Auswahl bezogenen Zelleninformationen empfangen werden soll.

9. Verfahren gemäß Anspruch 7, wobei die erste Kennzeichennachricht einen Funkruf und nach dem Empfang der ersten Kennzeichennachricht einen Zellinformationsindikator umfasst, wobei das Verfahren ferner umfasst:
den Zelleninformationsindikator speichern; und
nach dem Empfang der dritten Kennzeichennachricht mittels des gespeicherten Zelleninformationsindikators bestimmen, dass die aktive Funkzelle in den Sperrzustand geschaltet ist.

10. Verfahren gemäß Anspruch 7, wobei die erste Kennzeichennachricht einen Systeminformationsblock Typ 1 und nach dem Empfang der ersten Kennzeichennachricht einen Zellinformationsindikator umfasst, wobei das Verfahren ferner umfasst:
bestimmen, dass die aktive Funkzelle in den Sperrzustand geschaltet ist und den Zelleninformationsindikator in der Nachricht mit dem Systeminformationsblock Typ 1 bestimmen.

11. UMTS-Endgerät (130) umfassend:
eine Sende-Empfangseinrichtung (133), die ein drahtloses Signal sendet und empfängt;
einen Prozessor (136), der mit der Sende-Empfangseinrichtung (133) gekoppelt und dafür ausgelegt ist, die folgenden Schritte auszuführen:
eine erste Kennzeichennachricht mit einem Zelleninformationsindikator von der aktiven Funkzelle mittels der Sende-Empfangseinrichtung (133) empfangen, wobei die erste Kennzeichennachricht ferner anzeigt, dass die aktive Funkzelle in den Sperrzustand geschaltet wird oder das UMTS-Endgerät (130) eine dritte Kennzeichennachricht empfängt die anzeigt, dass die aktive Funkzelle nach dem Empfang der ersten Kennzeichennachricht mittels der Sende-Empfangseinrichtung (133) in den Sperrzustand geschaltet wird;
bestimmen, ob eine gemäß dem Zellinformationsindikator zweite Kennzeichennachricht mit mindestens einem Systeminformationsblock und auf die erneute Auswahl bezogene Zelleninformationen mittels der Sende-Empfangseinrichtung (133) empfangen werden soll, wenn festgestellt wird, dass die aktive Funkzelle in den Sperrzustand geschaltet ist; und
eine zweite Kennzeichennachricht im nächsten Modifikationszeitraum des Zellsysteminformationskanals (BCCH) empfangen, bevor die Zelle erneut ausgewählt wird, wenn festgestellt wird, dass die aktive Funkzelle gesperrt und der Zelleninformationsindikator auf einen bestimmten Wert gesetzt ist;
wobei das UMTS-Endgerät (130) mit entsprechenden Mitteln dafür ausgelegt ist, veraltete Zelleninformation gemäß den auf die erneute Auswahl bezogenen Zelleninformationen aktualisiert;
wobei die auf die erneute Auswahl bezogenen Zelleninformationen mindestens einen Systeminformationsblock von mindestens einer Trägerfrequenz oder auf die Nachbarzellen bezogene Informationen umfasst.

12. UMTS-Endgerät (130) gemäß Anspruch 11, wobei der Prozessor (136) ferner dafür ausgelegt ist, den folgenden Schritt auszuführen:
im nächsten BCCH-Modifikationszeitraum mindestens einen Systeminformationsblock empfangen, wenn der Zelleninformationsindikator anzeigt, dass die zweite Kennzeichennachricht mit den auf die erneute Auswahl bezogenen Zelleninformationen empfangen werden soll.

13. UMTS-Endgerät (130) gemäß Anspruch 11, wobei die erste Kennzeichennachricht einen Funkruf umfasst, und der Prozessor (136) ferner dafür ausgelegt ist, den folgenden Schritt auszuführen:
den Zelleninformationsindikator speichern; und
nach dem Empfang der dritten Kennzeichennachricht mittels des gespeicherten Zelleninformationsindikators bestimmen, dass die aktive Funkzelle in den Sperrzustand geschaltet ist.

14. UMTS-Endgerät (130) gemäß Anspruch 11, wobei die erste Kennzeichennachricht eine Mitteilung mit einem Systeminformationsblock Typ 1 umfasst und der Prozessor (136) ferner dafür ausgelegt ist, den folgenden Schritt auszuführen:
bestimmen, dass die aktive Funkzelle in den Sperrzustand geschaltet ist und den Zelleninformationsindikator in der Nachricht mit dem Systeminformationsblock Typ 1 bestimmen.

## Revendications

1. Un procédé de traitement de cellules de desserte devenant état barré, réalisé par une station de base (110), le procédé comprenant :
déterminer s'il faut fournir des informations relatives à la re-sélection de cellule mise à jour lorsque la station de base (110) détermine la commutation à l'état barré (S410) ; et, si oui,
transmettre un premier message de signalisation comprenant un indicateur d'information de cellule, dans lequel l'indicateur d'information de cellule est utilisé pour indiquer si la station de base (110) transmet un deuxième message de signalisation comprenant au moins un bloc d'information système et les informations relatives à la re-sélection de cellule mise à jour (S430),
dans lequel soit le premier message de signalisation indique en outre que la cellule de desserte est commutée à l'état barré, soit la station de base (110) émet un troisième message de signalisation indiquant que la cellule de desserte est commutée à l'état barré après l'émission du premier message de signalisation ;
dans lequel le deuxième message de signalisation est transmis dans la période de modification d'un prochain canal de commande de diffusion, le BCCH (canal balisé) ;
dans lequel les informations relatives à la re-sélection de cellule d'au moins un bloc d'information système comprend au moins une fréquence porteuse ou des informations relatives aux cellules voisines.

2. Le procédé selon la revendication 1, dans lequel après l'étape de transmission du premier message de signalisation comprenant l'indicateur d'information de cellule, le procédé comprend en outre ;
la transmission d'au moins un bloc d'information système dans une prochaine période de modification BCCH si l'indicateur d'information de cellule indique que la station de base (110) transmettra le deuxième message de signalisation comprenant les informations liées à la re-sélection de cellule.

3. Le procédé selon la revendication 2, dans lequel avant l'étape de transmission d'au moins un bloc d'information système dans la prochaine période de modification BCCH, le procédé comprend en outre :
l'augmentation d'un taux de répétition pour transmettre au moins un bloc d'information système.

4. Une station de base (110) comprenant :
un émetteur-récepteur (113), transmettant et recevant un signal sans fil ;
un processeur (116), couplé à l'émetteur-récepteur (113), et configuré pour exécuter les étapes suivantes :
déterminer le passage à un statut barré ;
déterminer s'il faut fournir des informations relatives à la re-sélection de cellule mise à jour ; et
si des informations relatives à la re-sélection de cellule mise à jour doivent être fournies, transmettre le premier message de signalisation comprenant un indicateur d'information de cellule à travers l'émetteur-récepteur (113), dans lequel l'indicateur d'information de cellule dans le premier message de signalisation est utilisé pour indiquer si la station de base (110) transmettra un deuxième message de signalisation comprenant au moins un bloc d'information système et les informations relatives à la re-sélection de cellule mise à jour par l'intermédiaire de l'émetteur-récepteur (113),
dans lequel soit le premier message de signalisation indique en outre qu'une cellule de desserte de la station de base passe à l'état barré, soit la station de base (110) transmet un troisième message de signalisation indiquant que la cellule de desserte passe à l'état barré par l'émetteur-récepteur (133) après avoir transmis le premier message de signalisation,
dans lequel le deuxième message de signalisation est transmis dans la période de modification d'un prochain canal de commande de diffusion, le BCCH (canal balisé) ;
dans lequel les informations relatives à la re-sélection de cellule d'au moins un bloc d'information système comprend au moins une fréquence porteuse ou des informations relatives aux cellules voisines.

5. La station de base (110) selon la revendication 4, dans laquelle le processeur est en outre configuré pour exécuter une étape suivante :
transmettre au moins un bloc d'information système à travers l'émetteur-récepteur (113) dans une prochaine période de modification BCCH si l'indicateur d'information de cellule indique que la station de base (110) transmettra le deuxième message de signalisation comprenant les informations liées à la re-sélection de cellule.

6. La station de base (110) selon la revendication 5, dans laquelle le processeur est en outre configuré pour exécuter une étape suivante :
augmenter un taux de répétition pour transmettre au moins un bloc d'information système.

7. Un procédé de traitement de cellules de desserte devenant état barré, réalisé par un matériel employé par utilisateur (130), le procédé consistant à :
recevoir un premier message de signalisation comprenant un indicateur d'information de cellule à partir de la cellule de desserte (S610),
dans laquelle soit le premier message de signalisation indique que la cellule de desserte est commutée à l'état barré, soit que le matériel employé par l'utilisateur (130) reçoit un troisième message de signalisation indiquant que la cellule de desserte est commutée à l'état barré après avoir reçu le premier message de signalisation ; et
déterminer s'il faut recevoir un deuxième message de signalisation comprenant au moins un bloc d'information système et des informations liées à la re-sélection de cellule en fonction de l'indicateur d'information de cellule lorsqu'il est déterminé que la cellule de desserte passe à l'état barré (S630) ; et
s'il est déterminé que la cellule de desserte est barrée et que l'indicateur d'information de cellule est réglé à une certaine valeur, recevant le deuxième message de signalisation dans une prochaine période de modification de canal de contrôle de diffusion, le BCCH, avant d'effectuer la re-sélection de cellule,
dans lequel le matériel employé par l'utilisateur (130) met à jour une information de cellule obsolète selon les informations relatives à la re-sélection de cellule,
dans lequel l'information relative à la re-sélection de cellule d'au moins un bloc d'information système comprend au moins une fréquence porteuse ou des informations liées aux cellules voisines.

8. Le procédé selon la revendication 7, dans lequel après l'étape de détermination de la réception ou non du deuxième message de signalisation comprenant les informations relatives à la re-sélection de cellule selon l'indicateur d'information de cellule dans le premier message de signalisation, le procédé comprend en outre :
recevoir au moins un bloc d'information système dans une prochaine période de modification BCCH si l'indicateur d'information de cellule indique la réception du deuxième message de signalisation comprenant les informations relatives à la re-sélection de cellule.

9. Le procédé selon la revendication 7, dans lequel le premier message de signalisation comprend un message de radiomessagerie, et après l'étape de réception du premier message de signalisation comprenant l'indicateur d'information de cellule, le procédé comprend en outre :
le stockage d'indicateur d'information de cellule ; et
la détermination de l'indicateur d'information de cellules stockées après avoir reçu le troisième message de signalisation indiquant que la cellule de desserte actuelle est commutée à l'état barré.

10. Le procédé selon la revendication 7, dans lequel le premier message de signalisation comprend un message de type 1 du bloc d'information système, et après l'étape de réception du premier message de signalisation comprenant l'indicateur d'information de cellule, le procédé comprend en outre :
la détermination que la cellule de desserte passe à l'état barré et la détermination de l'indicateur d'information de cellule dans le message de type 1 du bloc d'information système.

11. Un matériel employé par l'utilisateur (130) comprenant :
un émetteur-récepteur (133), transmettant et recevant un signal sans fil ;
un processeur (136) couplé à l'émetteur-récepteur (133) et configuré pour exécuter les étapes suivantes :
recevoir un premier message de signalisation comprenant un indicateur d'information de cellule à travers l'émetteur-récepteur (133) à partir de la cellule de desserte, dans lequel soit le premier message de signalisation indique en outre que la cellule de desserte est commutée sur l'état barré, soit que le matériel employé par l'utilisateur (130) reçoit un troisième message de signalisation indiquant que la cellule de desserte passe à l'état barré par l'intermédiaire de l'émetteur-récepteur (133) après la réception du premier message de signalisation ; et
déterminer s'il faut recevoir un deuxième message de signalisation comprenant au moins un bloc d'information système et des informations liées à la re-sélection de cellule par l'émetteur-récepteur (133) en fonction de l'indicateur d'information de cellule lorsqu'il est déterminé que la cellule de desserte passe à l'état barré ; et
s'il est déterminé que la cellule de desserte est barrée et que l'indicateur d'information de cellule est réglé à une certaine valeur, recevant le deuxième message de signalisation dans la période de modification d'un prochain canal de contrôle de diffusion, le BCCH, avant d'effectuer une re-sélection de cellule,
dans lequel le matériel employé par l'utilisateur (130) est configuré avec des moyens adaptés pour mettre à jour une information de cellule obsolète en fonction des informations relatives à la re-sélection de cellule,
dans lequel les informations relatives à la re-sélection de cellule d'au moins un bloc d'information système comprend au moins une fréquence porteuse ou des informations relatives aux cellules voisines.

12. Le matériel employé par l'utilisateur (130) selon la revendication 11, dans lequel le processeur (136) est en outre configuré pour exécuter l'étape suivante :
recevoir au moins un bloc d'information système dans une prochaine période de modification BCCH si l'indicateur d'information de cellule indique la reception du deuxième message de signalisation comprenant les informations relatives à la re-sélection de cellule.

13. Le matériel employé par l'utilisateur (130) selon la revendication 11, dans lequel le premier message de signalisation comprend un message de télémessagerie, et le processeur (136) est en outre configuré pour exécuter les étapes suivantes :
stocker l'indicateur d'information de cellule ; et
déterminer l'indicateur d'information de cellules stockées après avoir reçu le troisième message de signalisation indiquant que la cellule de desserte actuelle est commutée à l'état barré.

14. Le matériel employé par l'utilisateur (130) selon la revendication 11, dans lequel le premier message de signalisation comprend un message de type 1 du bloc d'information système, et le processeur (136) est en outre configuré pour exécuter une étape suivante :
déterminer que la cellule de desserte est commutée à l'état barré, et déterminer l'indicateur d'information de cellule dans le message de type 1 du bloc d'information système.
